Europäisches Patentamt

European Patent Office

Office européen des brevets

(11) Publication number: **0 221 544 B1**

# EUROPEAN PATENT SPECIFICATION

(45) Date of publication of patent specification: **29.01.92** (51) Int. Cl.⁵: **B60N 2/14**, B60N 2/16

(21) Application number: **86115341.9**

(22) Date of filing: **05.11.86**

(54) **Adjustable-height swivel seat for vehicle.**

(30) Priority: **05.11.85 JP 170225/85**
**05.11.85 JP 170226/85**
**05.11.85 JP 170227/85**
**05.11.85 JP 170228/85**
**05.11.85 JP 170229/85**
**05.11.85 JP 170230/85**

(43) Date of publication of application:
**13.05.87 Bulletin 87/20**

(45) Publication of the grant of the patent:
**29.01.92 Bulletin 92/05**

(84) Designated Contracting States:
**BE DE FR GB NL**

(56) References cited:
**GB-A- 1 426 428**

**PATENT ABSTRACTS OF JAPAN, vol. 8, no.
26 (M-273)[1463], 3rd February 1984**

**PATENT ABSTRACTS OF JAPAN, vol. 8, no.
35 (M-276)[1472], 15th February 1984**

(73) Proprietor: **FUJI KIKO COMPANY, LIMITED
9-5 Nihonbashihon-cho 3-chome Chuo-ku
Tokyo(JP)**

(72) Inventor: **Ikegaya, Isao
c/o FUJI KIKO COMPANY, LTD. Washizu-Plant
2028, Washizu Kosai-shi Shizuoka-ken(JP)**

(74) Representative: **Schmidt-Evers, Jürgen,
Dipl.-Ing. et al
Patentanwälte Dipl.-Ing. H. Mitscherlich
Dipl.-Ing. K. Gunschmann Dipl.-Ing.
Dr.rer.nat. W. Körber Dipl.-Ing. J. Schmidt-
Evers Dipl.-Ing. W. Melzer Steinsdorfstrasse
10
W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

## BACKGROUND OF THE INVENTION

### (FIELD OF THE INVENTION)

The present invention relates generally to an adjustable-height swivel seat for a vehicle. More specifically, the invention relates to an adjustable-height swivel seat which can pivot between a normal, forward-facing position and a pivoted position directed toward a door opening for convenience of entry into and exit from the vehicle and which can move upwards and downwards so that the occupant can find the optimum driving position.

### (DESCRIPTION OF THE PRIOR ART)

Generally, swivel or rotatable seats for vehicles pivot or rotate about a central, vertical pivot axis by means of a pivot mechanism. The pivot mechanism generally comprises a stationary base secured to the vehicle floor, a pivotal support which is pivotally supported on the stationary base and a seat cushion mounted on the pivotal support.

As is well known, adjustable-height seats can be move upward and downward by means of a seat lifter unit in order to improve the forward visibility of short occupants. The seat lifter unit generally comprises a seat frame under the seat cushion and a link mechanism supporting the seat frame so as to be movable upward and downward.

In addition, the Japanese Patent First Publication (Tokkai) Showa 57-22926 describes a adjustable-height swivel seat which is characterized by combining the aforementioned pivotal mechanism with a seat lifter unit.

Document GB-A-1 426 428 shows an adjustable-height swivel seat according to the precharacterizing part of Claim 1.

However, in the case of these conventional adjustable- height swivel seats, the seat cushion will be relatively high since the pivotal mechanism and seat lifter unit are vertically aligned. Accordingly, there is a problem that a tall occupant cannot achieve the optimum seat position since the lowest position of the seat cushion is relatively high. Therefore, it cannot be said that these conventional swivel seats are practical. On the other hand, if each component is made thinner in order to lower the seat cushion, the stiffness of the seat unit will be decreased, thereby decreasing durability.

## SUMMARY OF THE INVENTION

It is therefore a principle object of the present invention to eliminate the aforementioned problems in conventional swivel seats.

In order to accomplish the aforementioned and other specific objects, an adjustable-height swivel seat for a vehicle, according to the present invention, is equipped with the features of the characterizing part of Claim 1.

The stationary component is secured to the floor or a fitting means, which fitting means is mounted on seat-slide means which allows the pivotal mechanism as well as the seat cushion to slide forward and rarward and which slidably supports them.

The seat-slide means comprises a pair of stationary rails secured to the floor and a pair of sliding rails movable along the stationary rails, and the fitting means comprises a pair of brackets which straddle the seat-slide means near the front and rear portions thereof and which are secured to the sliding rails so as to lie parallel to each other.

The brackets each comprise a support portion near its center, a first fixing portion stepped upwardly at one end for mounting the pivotal mechanism at a lower position, and a second fixing portion stepped downwardly at its other end, said first and second fixing portions being configured so as to hold the support portion horizontal.

## BRIEF DESCRIPTION OF THE DRAWINGS

The present invention will be understood more fully from the detailed description given herebelow and from the accompanying drawings of the preferred embodiment of the invention. The drawings are not intended to imply limitation of the invention to this specific embodiment, but are for explanation and understanding only.

In the drawings:

Fig. 1 is a plan view of an automotive vehicle in which the preferred embodiment of a swivel seat is installed;

Fig. 2 is a major part of the preferred embodiment of the swivel seat according to the invention;

Fig. 3 is a front elevation of the swivel seat frame viewed along the arrow III of Fig. 2;

Fig. 4 is a side elevation of the swivel seat frame viewed along the arrow IV of Fig. 2;

Fig. 5 is an exploded perspective view of a seat pivot lever assembly;

Fig. 6 is a section through a control lever;

Fig. 7 is a perspective view of a knob for the lever assembly viewed along the arrow VII of Fig. 5;

Fig. 8 is a section taken along the line VIII-VIII of Fig. 5;

Fig. 9 is a plan view taken along the arrow IX of Fig. 5;

Fig. 10 is a perspective view of the preferred embodiment of the brackets as secured to sliding rails according to the invention;

Fig. 11 is a partial plan view of a stationary base;

Fig. 12 and 13 are sections showing installation of a pivot pin pivotably supporting a linking means;

Fig. 14 is a perspective view of the installation structure of a driving link; and

Figs. 15 and 16 are sections showing installation of another pivot pin pivotably supporting a linking means.

## DESCRIPTION OF THE PREFERRED EMBODIMENT

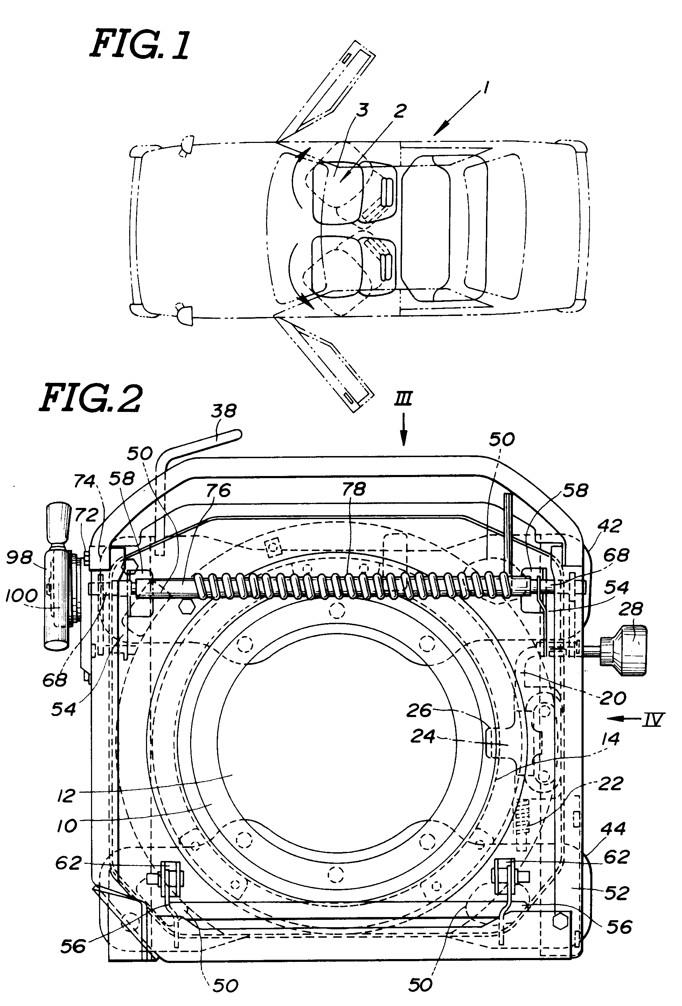

Referring now to the drawings, particularly to Fig. 1, the preferred embodiment of an adjustable-height swivel seat 2 for a vehicle 1, according to the present invention, is pivotable between a normal position in which the seat faces forward and a pivoted position in which it faces outward. In the pivoted position, the seat cushion 3 of the swivel seat 2 is directed toward the corresponding door opening of the vehicle so that the occupant of the seat can more easily get into or out of the vehicle 1. A pivot mechanism allowing the swivel seat 2 to pivot between the normal position and the pivoted position is built into the bottom of the seat cushion 3 and pivotably supports the seat cushion 3. The preferred embodiment of an adustable-height swivel seat 2 can also move upward and downward. A seat lifter unit allowing the swivel seat 2 to move upward and downward is built into the bottom of the seat cushion 3. A slide mechanism allowing the swivel seat to slide forward and rearward is also built into the bottom of the pivot mechanism and slidably supports the pivot mechanism as well as the seat cushion 3.

As shown in Figs. 2 to 4, the pivot mechanism generally comprises a stationary base 10 with a round opening 12 and a pivotal support 14 which is pivotably supported by the stationary base 10. The stationary base 10 is secured to the floor via the slide mechanism. The pivotal support 14 is provided with flanges 16 extending vertically from its edges and a supporting bracket 18 under the flanges 16. The supporting bracket 18 pivotably supports a seat pivot lever assembly 20 which is biased by means of a spring 22. The seat pivot lever assembly 20 is provided with a stopper strip 24 engaging a recess 26 in the stationary support 10. The stopper strip 24 can be engaged with the disengaged from the recess 26 by means of a knob 28 of the seat pivot lever assembly 20 so that the pivot mechanism can rotate and be locked.

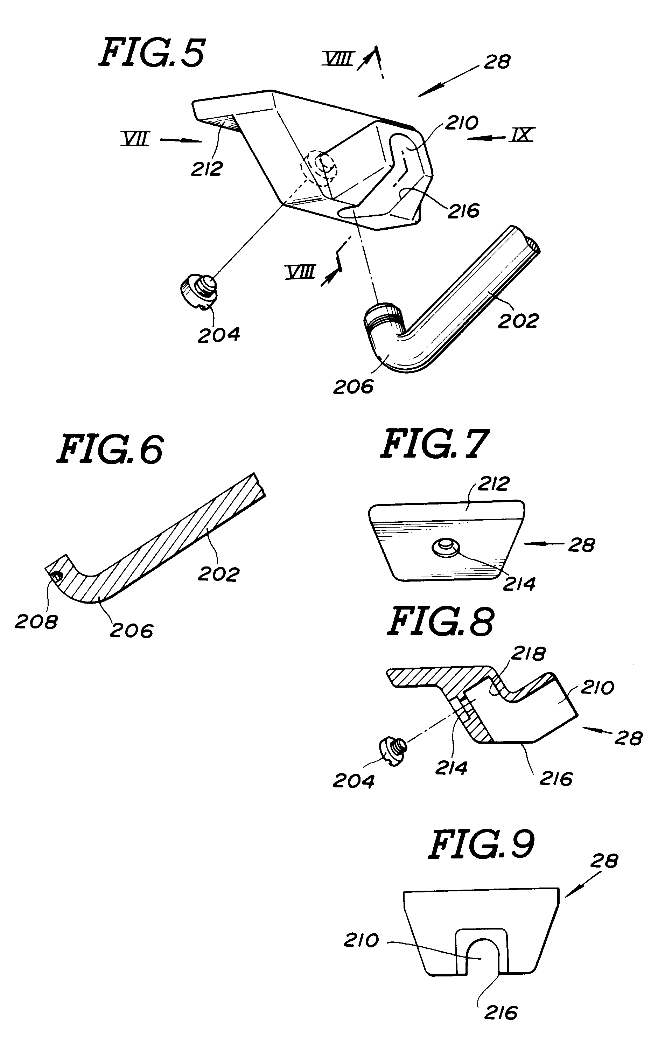

As shown in Fig. 5, the preferred embodiment of a seat pivot lever assembly 20, according to the present invention, comprises a round-rod-shaped control lever 202, a knob 28 and a fastening member 204. The seat cushion 3 can be rotated and locked by moving the control lever 202 of the seat pivot lever assembly 20 upward and downward. One end of the control lever 202 has a bend 206 with an engagement recess 208 as shown in Fig. 6. the knob 28 is secured to the end of the bend 206 of the control lever 202. As shown in Figs. 7 to 9, the knob 28 has a communicating groove 210, a handshaking portion 212, and a through opening 214. The end of the bend 206 of the control lever 202 can be inserted through the open end 216 of the opening 214 and fixed to a bend 218 in the knob 28 by means of the fastening bolt 204. According to the preferred embodiment of invention, even if a rounded control lever is used, the knob will not be able to pivot around the lever.

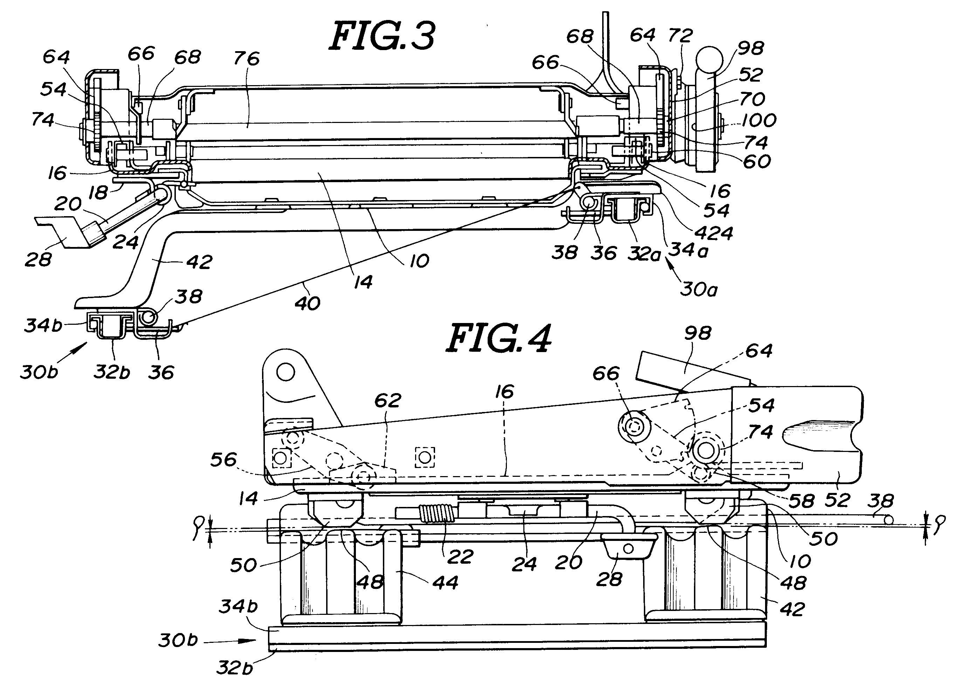

As shown in Figs. 3 and 4, the slide mechanism generally comprises two parallel seat-slide assemblies 30a and 30b. The assemblies 30a and 30b comprise stationary rails 32a and 32b secured to the vehicle floor and sliding rails 34a and 34b movable along the stationary rails 32a and 32b. The stationary rail 32a is secured to the vehicle floor near the center of the vehicle so as to extend forward and rearward and the stationary rail 32b is secured to the vehicle floor near the door opening and lies parallel to the rail 32a. The sliding rails 34a and 34b can slide or be locked on the stationary rails 32a and 32b by engaging or disengaging from pins 36 with the aid of a seat-slide lever 38. The pins 36 engaging the sliding rails 34a and 34b are all driven simultaneously by means of a wire 40.

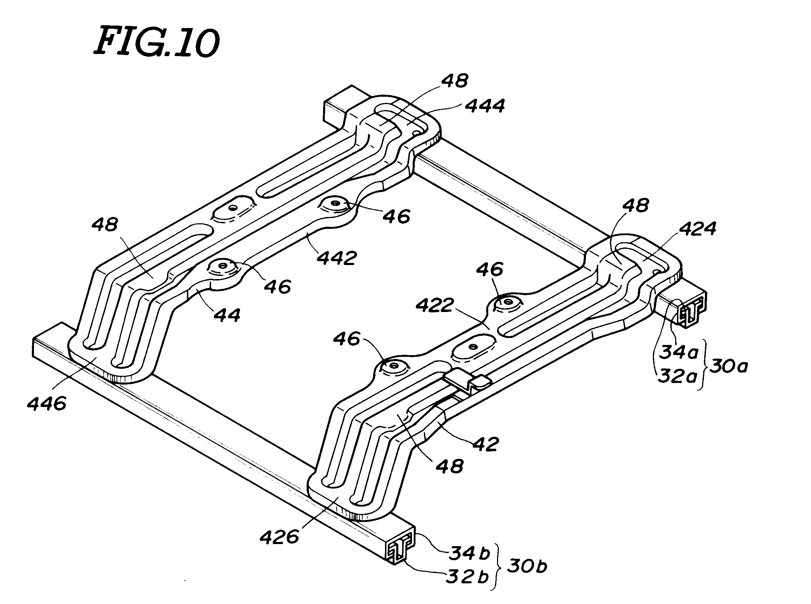

As shown in Fig. 10, two brackets 42 and 44 straddle the sliding rails 34a and 34b near the front and rear ends thereof and are secured to the sliding rails 34a and 34b so as to lie parallel to each other. The brackets 42 and 44 respectively comprise support portion 422 and 442 disposed near the center of the brackets 42 and 44, first fixing portions 424 and 444 stepped upwardly near one end of the brackets 42 and 44 and second fixing portions 426 and 446 stepped downwardly near another end of the brackets 42 and 44 the first fixing portions 424 and 444 are secured to the sliding rail 34a and the second fixing portions 426 and 446 are secured to the sliding rail 34b. The support portions 422 and 442 are provided with mounting holes 46 used for securing a stationary base 10 of the pivot mechanism. The stationary base 10 can be mounted at a relatively low position since the fixed portions 424 and 444 lie higher than the support portions. The stationary base 10 can also be mounted on the vehicle floor, even if the vehicle floor is higher near the center of the vehicle than near the door opening, since the second fixing portions 426 and 446 lie lower than the first fixing portions 424 and 444. In addition, the support portions 422 and 442 and the fixed portions 424 and 444 are provided with pedestals 48.

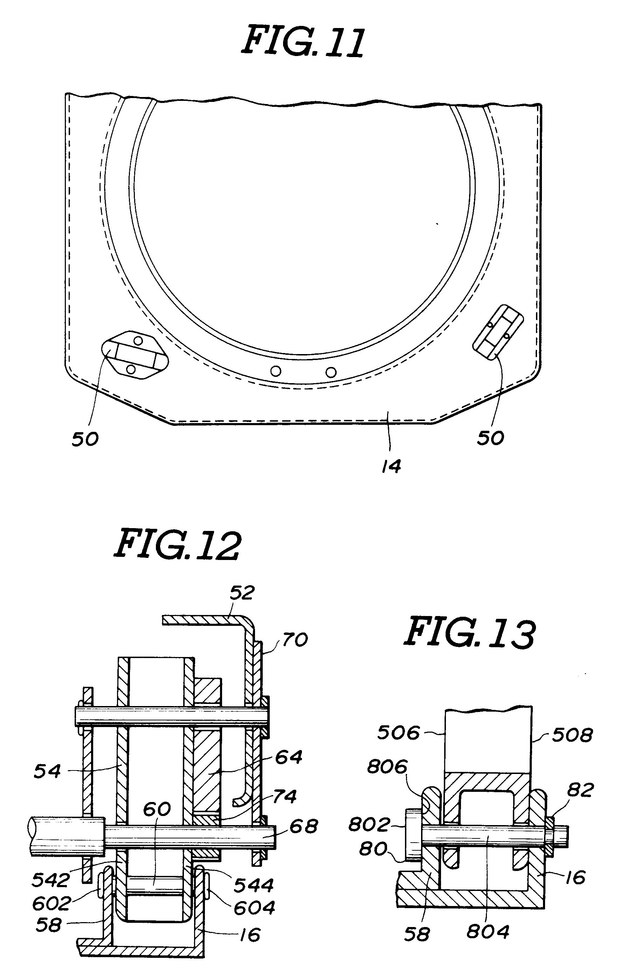

As shown in Fig. 11, contact members 50 are secured to the lower surface of the pivotal support 14 so as to oppose the pedestals 48 when the seat is in its normal position in which it faces forward. There is a slight clearance $\rho$ between the pedestals 48 and the contact member 50 so that the pivotal support can rotate easily. In the normal position, the contact members come into contact with the opposing pedestals when the occupant sits on the seat cushion 3, whereby the seat cushion becomes more stable.

The seat cushion 3 is secured to a seat frame 52 which is provided with a seat lifter unit. The seat lifter unit generally comprises driving links 54 and driven links 56 following the action of the driving links 54. The upper ends of the driving links 54 and the driven links 56 are connected to the seat frame 52 so that the driving links 54 and the driven links 52 pivotably support the seat frame 52. The lower ends of the driving links 54 are pivotably supported by the flanges 16 of the pivotal support 14 and brackets 58 by means of pivot pins 60. The lower ends of the driven links 56 are pivotably supported by brackets 62 secured to the upper surface of the pivotal support 14. The pivotal support 14 is housed within the seat frame 52 while the seat frame 52 is in its lowest position since the circumference of the pivotal support 14 is less than that of the seat frame 52. Sector gears 64 are pivotably mounted at the upper end of the driving links 54 by means of pins 66. Drive shafts 68 are pivotably supported on the seat frame 52 by means of a bracket 70 secured to the seat frame 52 by means of bolts 72. The drive shafts 68 are integral with a center gear 74 engaging the sector gears 64. A rotary transmission of the driving links 54 comprises the sector gears 64 and the center gears 74. The drive shafts 68 are connected to each other via a rotating shaft 76. Another rotary transmission of the driving links 54 is interlocked by the rotating shaft 76. A spring 78 surrounds the rotating shaft 76. One end of the spring 78 is secured to the rotating shaft 76 and the another end of the spring 78 biases the driving links 54 to rise. A seat lifter unit comprises the driving links 54, driven links 56, sector gears 64 and center gears 74.

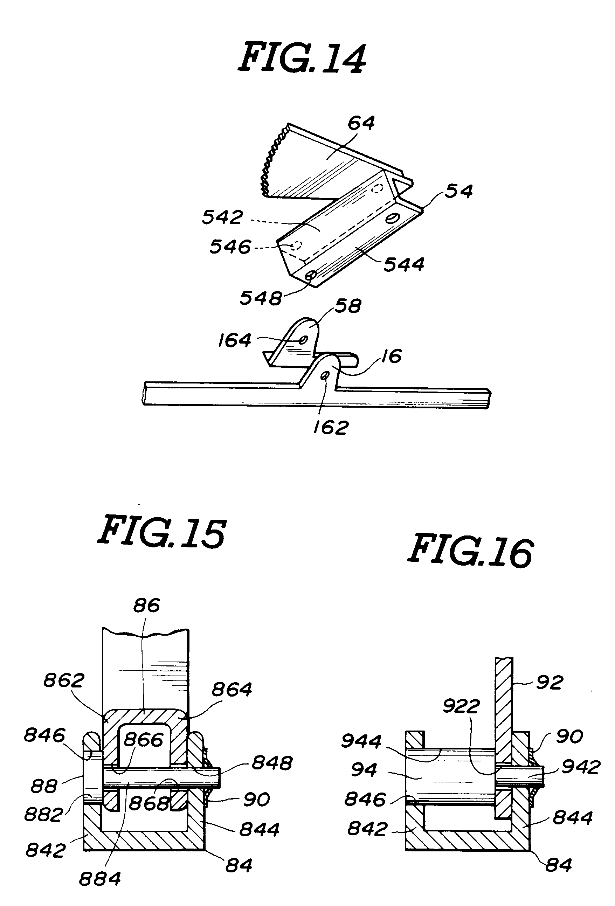

According to a preferred embodiment of the invention, as shown in Figs. 12 through 16, the driving links 54 of the seat lifter unit are essentially U-shaped and provided with through-openings 546 and 548 in their side walls 542 and 544. The bracket 58 and the flange 16 are provided with through-openings 162 and 164 in their side walls. As shown in Figs. 12, pivot pins 60 passing through the through-openings support the driving links 54. The pivot pins 60 may be provided with stops 602 and 604 so that the pins 60 cannot slip out as shown in Fig. 12. The driving links 54 may alternatively be supported by pivot pins 80 comprising a head 802 and a shaft 804 as shown in Fig. 13. The inner surface 806 of the head 802 is brought into contact with the outer surface of the bracket 58 and a nut 82 is screwed onto the end of the shaft 804, whereby the driving link 54 is held on the pivot pin 80. As shown in Fig. 15, the seat lifter unit may also comprise a bracket 84 having side walls 842, 844 and an essentially U-shaped cross-section, a driving link 86 supported by the bracket 84, the driving link 86 having side walls 862, 864 and an essentially U-shaped cross section, and a pivot pin 88 comprising a head 882 and a shaft 884. The side walls 842 and 844 of the bracket 84 are provided with a large-diameter opening 846 and a small-diameter opening 848, respectively. The side walls 862 and 864 are provided with openings 866 and 868, respectively. The head 882 of the pivot pin 88 is made to engage the opening 846 of the side wall 842 of the bracket 84 and the shaft 884 of the pivot pin 88 is inserted into the openings 866, 868 of the side walls 862, 864 of the driving link 86. A nut 90 is then screwed onto the end of the shaft 884, whereby the driving link 86 is held on the pivot pin 88. As shown in Fig. 16, the seat lifter unit may also comprise a plate-driving link 92, a bracket 84 with side walls 842, 844 and an essentially U-shaped cross-section, and a horizontal pivot pin 94 with a small diameter shaft 942 and a large-diameter head 944 of exaggerated thickness. The side walls 842 and 844 of the bracket 84 have a large-diameter opening 846 and a small-diameter opening 848, respectively. The driving link 92 has an opening 922. The head 944 is made to engage the opening 846 of the bracket 84 and is brought into contact with the inner surface of the driving link 92. The shaft 942 of the pivot pin 94 is inserted into the opening 922 of the driving link 92 and the opening 848 of the bracket 84. A nut 96 is screwed onto the end of the shaft 942, whereby the driving link 92 is held on the pivot pin 94. According to the aforementioned preferred embodiment shown in Figs. 15 and 16 of the invention, since the end surface of the link is in direct contact with the inner surface of the pivot pin, the link can be pivotably supported by the bracket without any clearance between the link and the bracket, so that there need be no play in the link parallel to the axis of the pivot pin. Therefore, the action of the seat lifter unit will be stable during use for a long time. Furthermore, it is not necessary to leave space to house the head of the pivot pin outside the seat frame since the head of the pivot pin does not project outside the bracket.

A lifter lever 98 as well as a braking means 100 are mounted on one outside surface of the seat frame 52 on the axis of the driving shafts 68. The driving shaft 68 can be rotated by pivoting the lifter lever 98. However, rotation of the driving shaft 68 is restricted so that the lifter lever 98 does not pivot when loaded as an occupant gets into the seat.

As the occupant enters the vehicle by moving the knob 28 downward, the stopper strip 24 projecting from the pivotal support 14 can be released from the recess 26 in the stationary base 10, so that the pivotal support 14 can be rotated about the stationary base 10 through about 60 degrees from the normal position the pivoted position. When the pivotal support 14 returns to the normal position after the occupant sits down on the seat, the stopper strip 24 of the seat pivot lever 20 engages the recess 26 of the stationary base 10 due to the biasing force of the spring 22, whereby the seat cushion 3 is fixed in place. The seat cushion 3 can be slid forward and rearward by moving the end of the seat-slide lever 38 downward, i.e. by allowing the axle of the seat-slide lever 38 to pivot counterclockwise as viewed from the front of the vehicle. When the seat-slide lever 38 is released by the occupant after he or she adjusts the seat cushion 3 to the optimum position, the pins 36 engage the sliding rails 34a and 34b, whereby the seat cushion 3 is fixed in place.

Afterward, by moving the end of the lifter lever 98 downward, i.e. by allowing the axle of the lifter lever 98 to pivot counterclockwise as viewed from the side of the seat frame 52, a short occupant can raise the seat cushion 3 to the optimum position so that the visual range of the occupant can be improved. The center gears 74 integral to the driving shaft 68 rotate in response to operation of the lifter lever 98 so that the sector gears 64 engaging the center gears 74 rotate around the pivot pins 66, whereby the ends of the driving links are lifted to a higher position. The action of the driving links 54 is transmitted to the driven links by means of the seat frame 52 so that the ends of the driven links are also lifted to a higher position. Accordingly, the seat cushion 3 secured to the seat frame 52 rises so that the occupant can move to the optimum position for him or her. Furthermore, according to the invention, the pivotal support 18 is housed inside the seat frame 52 while the seat frame 52 is at its lowest position since the circumference of the pivotal support 14 is less than that of the seat frame 52.

**Claims**

1. An adjustable-height swivel seat (2) for a vehicle (1) comprising:
a seat frame (52) supporting a seat cushion (3) thereon;
a pivotal mechanism having a stationary component (10) secured to a floor and a pivotal component (14) supporting said seat frame (52) for rotation therewith and pivotably supported by said stationary component (10), the circumference of said stationary component (10) beeing less than that of said seat frame; and lifting means (54, 56) for moving said seat frame (52) upward and downward between an upper position and a lower position; characterized in that
said lifting means (54, 56) is housed within said seat frame (52), and said pivotal mechanism is received within said seat frame when said lifting means (54, 56) is positioned at said lower position so as to decrease the height of the seat frame.

2. An adjustable-height swivel seat as set forth in claim 1, characterized in that said stationary component (10) is secured to the floor by means of fitting means.

3. An adjustable-height swivel seat as set forth in claim 2, characterized in that said fitting means is secured to seat-slide means (30a, 30b) which allows said pivotal mechanism as well as said seat cushion (3) to slide forward and rearward and which slidably supports them.

4. An adjustable-height swivel seat as set forth in claim 3, characterized in that said seat-slide means (30a, 30b) comprises a pair of stationary rails (32a, 32b) secured to the floor and a pair of sliding rails (34a, 34b) movable along the stationary rails.

5. An adjustable-height swivel seat as set forth in claim 3 or 4, characterized in that said fitting means comprises a pair of first brackets (42, 44) which straddle said seat-slide means (30a, 30b) near the front and rear ends thereof so that said first brackets (42, 44) and said seat-slide means (30a, 30b) define a square (Fig. 10).

6. An adjustable-height swivel seat as set forth in claim 5, characterized in that said first brackets (42, 44) each comprise a support portion (422, 442) near its center, a first fixing portion (424, 444) stepped upwardly at one end and a second fixing portion (426, 446) stepped downwardly at its other end, said first and second fixing portions (424, 426, 444, 446) being configured so as to hold said support portion (422, 442) horizontal.

7. An adjustable-height swivel seat as set forth in claim 6, characterized in that said first bracket (42, 44) is provided with a pedestal (48) at a predetermined position, the bottom surface of said pivotal component is provided with a contact member (50) at a position opposing the pedestal (48), and wherein there is a slight clearance ($\rho$) between the pedestal and the contact member so that said pivotal component can smoothly rotate and said seat cushion (3) can be made stable by bringing said contact member (50) into contact with the opposing pedestal (48) when the seat (2) is facing forward and the occupant is sitting on the seat cushion (3).

8. An adjustable-height swivel seat as set forth in any one of claims 1 to 7, characterized in that the lower end of said lifting means (54, 56) is pivotably supported by a second bracket (58) by means of a pivot pin (60; 80; 88; 94), which second bracket (58) is secured to the upper surface of said pivotal component and has side walls opposing each other.

9. Adjustable-height swivel seat as set forth in claim 8, characterized in that said pin (60) is provided with stops (602, 604) so that the pivot pin (60) is retained by said second bracket (58).

10. An adjustable-height swivel seat as set forth in claim 8, characterized in that said pivot pin (80) comprises a head (802) and a shaft (804), the inner surface of said head (802) being brought into contact with the outer surface of said second bracket (58) and the distal end of said shaft engaging a nut (82).

11. An adustable-height swivel seat as set forth in claim 8, characterized in that said lifting means is essentially U-shaped (86) in cross-section and said pivot pin (88) comprises a head (882) and a shaft (884), said head (882) engaging a large-diameter through-opening (846) in the side wall (842) of said second bracket (84) so as to lie flush with the outside surface of said second bracket (84), the inner surface of said head (882) being brought into contact with the outer surface of said lifting means (86) and the end of said shaft (88) being inserted through a small-diameter opening (848) in the opposing side wall (844) of said second bracket (84) and engaging a nut (90).

12. An adjustable-height swivel seat as set forth in claim 8, characterized in that said lifting means is essentially strip-shaped (92) and said pivot pin (94) comprises a small-diameter shaft (942) and a large-diameter head (944) elongated in the direction parallel to the axis of said shaft (942), one end of said head (944) engaging a large-diameter through-opening (846) in the side wall (842) of said second bracket (84) and lying flush with the outside surface of said second bracket (84) and the inner surface of the other end of said head (944) being brought into contact with the outer surface of said lifting means (92) and the end of said shaft (942) being inserted through a small-diameter opening in the opposing side wall of said second bracket (844) and engaging a nut (90).

13. An adjustable-height swivel seat as set forth in any one of claims 1 to 12, characterized in that said lifting means comprises a driving link (54) and a driven link (56) following the action of the driving link (54).

14. An adjustable-height swivel seat as set forth in claim 13, characterized in that said pivotal component has flanges (16) extending vertically from its edge and said pivotal component is provided with a third bracket (62) on its upper surface, said flanges (16) and said third bracket (62) being disposed in parallel and pivotably supporting the lower end of said driving link (54).

15. An adjustable-height swivel seat as set forth in any one of claims 1 to 14, characterized in that said pivotal mechanism is rotated and locked by moving a control lever (202) of a seat pivot lever assembly (20) upward and downward.

16. An adjustable-height swivel seat as set forth in claim 15, characterized in that said seat pivot lever assembly (20) comprises a round-rod-shaped control lever (202), a knob (28) and a fastening member (204).

17. An adustable-height swivel seat as set forth in claim 16, characterized in that one end of said control lever (202) is bent and has an engaging recess (208), and wherein said knob (29) is provided with a through opening (214) allowing the end of the bend (206) in the control lever (202) to be fixed to said knob (28) by said fastening member (204).

**Revendications**

1. Siège pivotant (2) de hauteur réglable pour véhicule (1) comprenant :

   un châssis (52) de siège supportant un coussin d'assise (3), un mécanisme pivotant ayant un élément fixe (10) qui est fixé à un plancher et un élément pivotant (14) qui supporte le châssis (52) afin qu'il tourne avec lui et qui est supporté de manière pivotante par l'élément fixe (10), la circonférence de l'élément fixe (10) étant inférieure à celle du châssis du siège, et un dispositif de soulèvement (54, 56) destiné à déplacer le châssis (52) vers le haut et vers le bas entre une position supérieure et une position inférieure, caractérisé en ce que :

le dispositif de soulèvement (54, 56) est logé dans le châssis (52) du siège, et le mécanisme pivotant est logé dans le châssis du siège lorsque le dispositif de soulèvement (54, 56) a sa position inférieure, afin que la hauteur du châssis du siège soit réduite.

2. Siège pivotant de hauteur réglable selon la revendication 1, caractérisé en ce que l'élément fixe (10) est fixé au plancher par un dispositif de montage.

3. Siège pivotant de hauteur réglable selon la revendication 2, caractérisé en ce que le dispositif de montage est fixé à un dispositif (30a, 30b) de coulissement de siège qui permet au mécanisme pivotant ainsi qu'au coussin (3) d'assise de coulisser vers l'avant et vers l'arrière, et qui les supporte afin qu'ils puissent coulisser.

4. Siège pivotant de hauteur réglable selon la revendication 3, caractérisé en ce que le dispositif (30a, 30b) de coulissement de siège comprend une paire de rails fixes (32a, 32b) fixés au plancher et une paire de rails coulissants (34a, 34b) mobiles le long des rails fixes.

5. Siège pivotant de hauteur réglable selon la revendication 3 ou 4, caractérisé en ce que le dispositif de montage comporte une paire de première équerres (42, 44) qui chevauchent le dispositif (30a, 30b) de coulissement de siège près des extrémités avant et arrière de celui-ci si bien que les premières équerres (42, 44) et le dispositif (30a, 30b) de coulissement de siège délimitent un carré (figure 10).

6. Siège pivotant de hauteur réglable selon la revendication 5, caractérisé en ce que les premières équerres (42, 44) comportent chacune une partie de support (422, 442) près de son centre, une première partie de fixation (424, 444) décalée vers le haut à une première extrémité et une seconde partie de fixation (426, 446) décalée vers le bas à son autre extrémité, la première et la seconde partie de fixation (424, 426, 444, 446) ayant une configuration telle qu'elles maintiennent la partie de support (422, 442) horizontalement.

7. Siège pivotant de hauteur réglable selon la revendication 6, caractérisé en ce que la première équerre (42, 44) a un palier (48) en position prédéterminée, la surface inférieure de l'élément pivotant a un organe de contact (50) occupant une position qui se trouve en face du palier (48), et il existe un petit espace ($\rho$) entre le palier et l'organe de contact de manière que l'élément pivotant puisse tourner régulièrement et que le coussin d'assise (3) puisse être rendu stable par mise de l'organe (50) de contact au contact du palier opposé (48) lorsque le siège (2) est tourné vers l'avant et l'occupant est assis sur le coussin d'assise (3).

8. Siège pivotant réglable en hauteur selon l'une quelconque des revendications 1 à 7, caractérisé en ce que l'extrémité inférieure du dispositif de soulèvement (57, 56) est supportée de manière articulée par une seconde équerre (58) à l'aide d'un axe (60 ; 80 ; 88 ; 94) formant pivot, la seconde équerre (58) étant fixée à la surface supérieure de l'élément pivotant et ayant des parois latérales opposées.

9. Siège pivotant réglable en hauteur selon la revendication 8, caractérisé en ce que l'axe (60) a des butées (602, 604) afin que l'axe (60) formant pivot soit retenu par la seconde équerre (58).

10. Siège pivotant de hauteur réglable selon la revendication 8, caractérisé en ce que l'axe (80) formant pivot comporte une tête (802) et un arbre (804), la surface interne de la tête (802) étant mise au contact de la surface externe de la seconde équerre (58) et l'extrémité externe de l'arbre coopérant avec un écrou (82).

11. Siège pivotant de hauteur réglable selon la revendication 8, caractérisé en ce que le dispositif de soulèvement a pratiquement une forme en U (86) en coupe et l'axe (88) formant pivot comprend une tête (882) et un arbre (884), la tête (882) coopérant avec une ouverture débouchante (846) de grand diamètre formée dans la paroi latérale (842) de la seconde équerre (84) afin qu'elle se trouve au niveau de la surface externe de la seconde équerre (84), la surface interne de la tête (882) étant mise au contact de la surface externe du dispositif de soulèvement (86) et l'extrémité de l'arbre (88) étant introduite dans une ouverture (848) de petit diamètre formée dans la paroi latérale opposée (844) de la seconde équerre (84) et coopérant avec un écrou (90).

**12.** Siège pivotant réglable en hauteur selon la revendication 8, caractérisé en ce que le dispositif de soulèvement a essentiellement la forme d'une bande (92) et l'axe (94) formant pivot a un arbre (942) de petit diamètre et une tête (944) de grand diamètre allongée en direction parallèle à l'axe de l'arbre (942), une première extrémité de la tête (944) coopérant avec une ouverture débouchante (846) de grand diamètre formée dans la paroi latérale (842) de la seconde équerre (84) et se trouvant au niveau de la surface externe de la seconde équerre (84), et la surface interne de l'autre extrémité de la tête (944) étant mise au contact de la surface externe du dispositif de soulèvement (92), et l'extrémité de l'arbre (942) étant introduite dans une ouverture de petit diamètre formée dans la paroi latérale opposée de la seconde équerre (844) et coopérant avec un écrou (90).

**13.** Siège pivotant de hauteur réglable selon l'une quelconque des revendications 1 à 12, caractérisé en ce que le dispositif de soulèvement comporte une bielle menante (54) et une bielle menée (56) suivant l'action de la bielle menante (54).

**14.** Siège pivotant de hauteur réglable selon la revendication 13, caractérisé en ce que l'élément pivotant a des flasques (16) disposés verticalement depuis son bord, et l'élément pivotant a une troisième équerre (62) à sa face supérieure, les flasques (16) et la troisième équerre (62) étant disposés parallèlement et supportant l'extrémité inférieure de la bielle menante (54) afin qu elle puisse pivoter.

**15.** Siège pivotant de hauteur réglable selon l'une quelconque des revendications 1 à 14, caractérisé en ce que le mécanisme pivotant est entraîné en rotation et est bloqué par déplacement d'un levier de commande (202) d'un ensemble (20) à levier de pivotement de siège, vers le haut et vers le bas.

**16.** Siège pivotant de hauteur réglable selon la revendication 15, caractérisé en ce que l'ensemble (20) à levier de pivotement de siège comporte un levier de commande (202) sous forme d'une tige circulaire, un bouton (28) et un organe de fixation (204).

**17.** Siège pivotant de hauteur réglable selon la revendication 16, caractérisé en ce qu'une première extrémité du levier de commande (202) est coudée et a une cavité (208) de coopération, et le bouton (28) a une ouverture débouchante (214) permettant la fixation de l'extrémité du coude (206) formé dans le levier de commande (202) au bouton (28) par l'organe de fixation (204).

**Patentansprüche**

**1.** Ein schwenkbarer Sitz (2) mit einstellbarer Hohe für ein Fahrzeug (1) mit:
einem Sitzrahmen (52), der ein auf ihm angeordnetes Sitzkissen (3) abstützt;
einem Drehmechanismus, der einen an einem Boden befestigten, unbeweglichen Teil (10) und einen drehbaren Teil (14) umfaßt, der den Sitzrahmen (52) zwecks Drehung mit ihm abstützt und durch den unbeweglichen Teil (10) drehbar abgestützt ist, wobei der Umfang des unbeweglichen Teils (10) kleiner als derjenige des Sitzrahmens ist; und einer Hubeinrichtung (54,56) zum Bewegen des Sitzrahmens (52) nach oben und nach unten zwischen einer oberen Stellung und einer unteren Stellung; dadurch gekennzeichnet, daß die Hubeinrichtung (54,56) innerhalb des Sitzrahmens (52) untergebracht ist, und der Drehmechanismus innerhalb des Sitzrahmens aufgenommen ist, wenn die Hubeinrichtung (54,56) in der unteren Stellung angeordnet ist, um die Höhe des Sitzrahmens zu verringern.

**2.** Ein schwenkbarer Sitz mit einstellbarer Höhe nach Anspruch 1,
dadurch gekennzeichnet, daß der unbewegliche Teil (10) mittels einer Befestigungseinrichtung am Boden befestigt ist.

**3.** Ein schwenkbarer Sitz mit einstellbarer Höhe nach Anspruch 2,
dadurch gekennzeichnet, daß die Befestigungseinrichtung an einer Sitz-Verschiebeeinrichtung (30a,30b) befestigt ist, welche ein Verschieben des Drehmechanismus sowie des Sitzkissens (3) nach vorwärts und rückwärts ermöglicht und welche dieselben verschiebbar abstützt.

**4.** Ein schwenkbarer Sitz mit einstellbarer Höhe nach Anspruch 3,
dadurch gekennzeichnet, daß die Sitz-Verschiebeeinrichtung (30a,30b) ein Paar am Boden befestigter, ortsfester Schienen (32a, 32b) und ein Paar längs der ortsfesten Schienen bewegbarer Gleitschienen (34a,34b) umfaßt.

**5.** Ein schwenkbarer Sitz mit einstellbarer Höhe nach Anspruch 3 oder 4,

dadurch gekennzeichnet, daß die Befestigungseinrichtung ein Paar erster Träger (42,44) umfaßt, das die Sitz-Verschiebeeinrichtung (30a,30b) nahe dem vorderen und hinteren Ende derselben überspannt, so daß diese ersten Träger (42,44) und die Sitz-Verschiebeeinrichtung (30a,30b) ein Rechteck definieren (Fig.10).

6. Ein schwenkbarer Sitz mit einstellbarer Höhe nach Anspruch 5,
dadurch gekennzeichnet, daß jeder erste Träger (42,44) nahe seiner Mitte einen Stützabschnitt (422,442), einen an einem Ende nach oben abgestuften, ersten Befestigungsabschnitt (424,444) und einen an seinem anderen Ende nach unten abgestuften zweiten Befestigungsabschnitt (426,446) umfaßt, wobei dieser erste und zweite Befestigungsabschnitt (424,426,444,446) so ausgebildet sind, daß sie den Stützabschnitt (422,442) horizontal halten.

7. Ein schwenkbarer Sitz mit einstellbarer Höhe nach Anspruch 6,
dadurch gekennzeichnet, daß der erste Träger (42,44) eine Abstützung (48) an einer vorbestimmten Stelle aufweist, die Bodenfläche des drehbaren Teils mit einem Kontaktelement (50) an einer der Abstützung (48) zugewandten Stelle versehen ist und ein geringes Spiel ($\rho$) zwischen der Abstützung und dem Kontaktelement besteht, so daß sich der drehbare Teil gleichmäßig drehen kann und das Sitzkissen (3) stabilisiert werden kann durch In-Kontakt-Bringen des Kontaktelementes (50) mit der zugewandten Abstützung (48), wenn der Sitz (2) nach vorne weist und der Insasse auf dem Sitzkissen (3) sitzt.

8. Ein schwenkbarer Sitz mit einstellbarer Höhe nach einem der Ansprüche 1 bis 7,
dadurch gekennzeichnet, daß das untere Ende der Hubeinrichtung (54,56) mittels eines Drehzapfens (60;80;88;94) drehbar an einem zweiten Träger (58) abgestützt ist, welcher zweite Träger (58) an der oberen Fläche des drehbaren Teils befestigt ist und einander gegenüberstehende Seitenwände aufweist.

9. Ein schwenkbarer Sitz mit einstellbarer Höhe nach Anspruch 8,
dadurch gekennzeichnet, daß der Zapfen (60) Anschläge (602,604) aufweist, so daß der Drehzapfen (60) durch den zweiten Träger (58) festgehalten ist.

10. Ein schwenkbarer Sitz mit einstellbarer Höhe nach Anspruch 8,

dadurch gekennzeichnet, daß der Drehzapfen (80) einen Kopf (802) und einen Schaft (804) umfaßt, wobei die Innenfläche des Kopfes (802) in Kontakt mit der Außenfläche des zweiten Trägers (58) gebracht ist und das entfernte Ende des Schaftes mit einer Mutter (82) im Eingriff steht.

11. Ein schwenkbarer Sitz mit einstellbarer Höhe nach Anspruch 8,
dadurch gekennzeichnet, daß die Hubeinrichtung im Querschnitt im wesentlichen U-förmig (86) ist und der Drehzapfen (88) einen Kopf (882) und einen Schaft (884) umfaßt, wobei der Kopf (882) in eine Durchgangsöffnung (846) großen Durchmessers in der Seitenwand (842) des zweiten Trägers (84) eingreift, so daß er in einer Ebene mit der Außenfläche des zweiten Trägers (84) liegt, die Innenfläche des Kopfes (882) in Kontakt mit der Außenfläche der Hubeinrichtung (86) gebracht ist und das Ende des Schaftes (88) eine Öffnung (848) kleinen Durchmessers in der gegenüberstehenden Seitenwand (844) des zweiten Träges (84) durchsetzt und mit einer Mutter (90) im Eingriff steht.

12. Ein schwenkbarer Sitz mit einstellbarer Höhe nach Anspruch 8,
dadurch gekennzeichnet, daß die Hubeinrichtung im wesentlichen bandförmig (92) und der Drehzapfen (94) einen Schaft (942) kleinen Durchmessers und einen in der Richtung parallel zur Achse dieses Schaftes (942) langgestreckten Kopf (944) großen Durchmessers umfaßt, wobei ein Ende des Kopfes (944) in eine Durchgangsöffnung (846) großen Durchmessers in der Seitenwand (842) des zweiten Trägers (84) eingreift und in einer Ebene mit der Außenfläche des zweiten Trägers (84) liegt und die Innenfläche des anderen Endes des Kopfes (944) in Kontakt mit der Außenfläche der Hubeinrichtung (92) gebracht ist und das Ende des Schaftes (942) eine Öffnung kleinen Durchmessers in der gegenüberstehenden Seitenwand des zweiten Trägers (844) durchsetzt und mit einer Mutter (90) im Eingriff steht.

13. Ein schwenkbarer Sitz mit einstellbarer Höhe nach einem der Ansprüche 1 bis 12,
dadurch gekennzeichnet, daß die Hubeinrichtung ein antreibendes Glied (54) und ein getriebenes Glied (56) umfaßt, das der Bewegung des antreibenden Gliedes (54) folgt.

14. Ein schwenkbarer Sitz mit einstellbarer Höhe nach Anspruch 13,
dadurch gekennzeichnet, daß der drehbare Teil vertikal von seinem Rand aus verlaufende Flansche (16) aufweist und der drehbare Teil mit einem dritten Träger (62) an seiner oberen Fläche versehen ist, wobei die Flansche (16) und der dritte Träger (62) parallel angeordnet sind und das untere Endes des antreibenden Gliedes (54) drehbar abstützen.

15. Ein schwenkbarer Sitz mit einstellbarer Höhe nach einem der Ansprüche 1 bis 14, dadurch gekennzeichnet, daß der Drehmechanismus durch Bewegen eines Betätigungshebels (202) einer Sitz-Drehhebelanordnung (20) nach oben und unten gedreht und verriegelt wird.

16. Ein schwenkbarer Sitz mit einstellbarer Höhe nach Anspruch 15, dadurch gekennzeichnet, daß die Sitz-Drehhebelanordnung (20) einen rundstabförmigen Betätigungshebel (202) einen Griffknopf (28) und ein Feststellelement (204) umfaßt.

17. Ein schwenkbarer Sitz mit einstellbarer Höhe nach Anspruch 16, dadurch gekennzeichnet, daß ein Ende des Betätigungshebels (202) abgebogen ist und eine Eingriffsvertiefung (208) aufweist, und wobei der Griffknopf (28) mit einer Durchgangsöffnung (214) versehen ist, die es ermöglicht, das Ende der Abbiegung (206) im Betätigungshebel (202) mittels des Feststellelementes (204) am Griffknopf(28) zu befestigen.

*FIG. 1*

*FIG. 2*

# FIG.3

# FIG.4

EP 0 221 544 B1

FIG.5

VIII

28

VII

210

IX

212

216

VIII

204

206

202

FIG.6

202

208

206

FIG.7

212

28

214

FIG.8

218

210

28

204

214

216

FIG.9

28

210

216

# FIG.10

# FIG.11

# FIG.12

# FIG.13

# FIG.14

# FIG.15

# FIG.16